# EUROPÄISCHE PATENTSCHRIFT

(11) **EP 1 517 218 B1**
(45) Veröffentlichungstag und Bekanntmachung des Hinweises auf die Patenterteilung: **02.08.2006**
(21) Anmeldenummer: 04019784.0
(22) Anmeldetag: 20.08.2004
(51) Int. Cl.: G06F 1/16, B62B 5/02

(54) **Fahrbarer Aufbewahrungsbehälter**
Mobile storage case
Boîtier de rangement mobile

(30) Priorität: 21.08.2003 DE 10338320; 28.06.2004 EP 04015097
(43) Veröffentlichungstag der Anmeldung: 23.03.2005
(73) Patentinhaber: Parat-Werk Schönenbach GmbH & Co. KG, 42897 Remscheid (DE)
(72) Erfinder: Pirchl, Mathias, 7323 Wangs (CH); Mathis, Franz, 6374 Buochs (CH); Pirchl, Gerhard, 7323 Wangs (CH); Profunser, Herbert, 6832 Zwischenwasser/Muntlix (AT)
(74) Vertreter: Riebling, Peter

(56) Entgegenhaltungen:
- EP-A- 0 774 403
- WO-A-01/77799
- DE-A1- 10 065 694
- US-B1- 6 218 796

## Beschreibung

Die Erfindung betrifft einen fahrbaren Aufbewahrungsbehälter nach dem Oberbegriff des Patentanspruchs 1.

Mit dem Gegenstand der DE 100 43 995 A1 ist ein Aufbewahrungsschrank für mobile Rechner mit einer automatischen Ladefunktion offenbart. In diesem Aufbewahrungsschrank können eine Reihe von mobilen Rechnern aufbewahrt werden, die während der Aufbewahrung gleich nachgeladen werden. Außerdem können auf dem Aufbewahrungsschrank weitere periphere Geräte, wie zum Beispiel Drucker, Scanner usw., aufgestellt und angeschlossen werden. Die Kopplung zu den Rechnern, die aus dem Aufbewahrungsschrank entnehmbar sind, kann über Infrarot oder Funk erfolgen.

Ein derartiger Aufbewahrungsschrank hat das Ziel, ein übliches Klassenzimmer, einen Seminarraum oder einen anderen Unterrichtsraum in einen EDV-Raum zu verwandeln. Zu diesem Zweck wird der bekannte Aufbewahrungsschrank in den ausgewählten Raum gefahren und die einzelnen mobilen Rechner werden aus dem Aufbewahrungsschrank entnommen und an dem jeweiligen Benutzerplatz aufgestellt. In der genannten Druckschrift wird jedoch nur offenbart, dass die einzelnen mobilen Rechner über die drahtlosen Schnittstellen mit dem Drucker im Aufbewahrungsschrank verbunden sind.

Eine derartige Anordnung ist jedoch nicht als "mobiles Klassenzimmer" geeignet. Es fehlt die Kommunikationsmöglichkeit der Mobilrechner untereinander und ferner eine zentrale Intelligenz, wie zum Beispiel ein zentral im Aufbewahrungsschrank angeordneter Server, der die einzelnen Datenströme von den Mobilrechnern entgegennimmt und entsprechend verarbeitet.

Es hat sich als wichtig herausgestellt, dass ein solches Aufbewahrungssystem (Aufbewahrungsschrank) mit größtmöglicher Mobilität in unterschiedliche Räume eines größeren Gebäudes transportiert werden kann, wobei diese Räume weit auseinanderliegen können und gegebenenfalls nur über Treppen zu erreichen sind.

Ein solches Aufbewahrungssystem soll die herkömmlich bekannten EDV-Räume ersetzen, die ständig durch eine festverkabelte Anordnung mehrerer Rechner belegt sind und die demzufolge keinem anderen Zweck zugeführt werden können.

Mit der US 6,102,497 A ist eine fahrbare Vorrichtung zur Aufnahme von verschiedenen Typen medizinischer Ausrüstung und anderer peripherer Geräte offenbart, wobei ein Fahrgestell mittels Standfuß mit der Aufnahme verbunden ist und die Aufnahme steckbar ausgebildet ist. Nachteil ist, dass die Vorrichtung keinen Antriebsmotor mit dazugehöriger Energieversorgung aufweist, welcher die Vorrichtung ohne menschlichen Kraftaufwand selbsttätig bewegt. Des Weiteren geht nicht eindeutig hervor, dass die Vorrichtung gemäß ihrem Aufbau Höhenunterschiede, wie zum Beispiel Treppenstufen überwinden kann.

Mit der DE 196 50 100 A1 wird ein verstellbarer Tisch für eine EDV-Anlage offenbart, welcher einen teleskopierbaren, schrägen Standfuß aufweist und das Basisteil auf Rollen gelagert ist. Nachteil ist, dass hier kein separater Antrieb angeordnet ist, welcher den Tisch selbsttätig bewegt und gegebenenfalls Höhenunterschiede (Treppenstufen) überwindet.

Mit der DE 33 16 896 A1 wird ein fahrbarer Gerätewagen für elektronische Geräte offenbart, welcher ein Oberteil, Seitenteile und Unterteil mit Fahrrollen aufweist und für einen eventuellen Transport zerlegbar ist. Nachteil ist, dass dieser Gerätewagen ebenfalls keinen Antrieb zur selbsttätigen Bewegung hat und nicht für einen Transport über Treppenstufen geeignet ist.

Die US 6,218,796 B1 offenbart einen Wagen zur Aufnahme von wiederaufladbaren Vorrichtungen mit Einlegeböden, auf denen die Vorrichtungen gelagert werden. Ladetransformatoren sind in einer Luftgekühlten oberen Kammer des Wagens angeordnet, und elektr. Verbindungen zur Verbindung der Ladetransformatoren sind in einer unteren Kammer des Wagens vorgesehen. Eine Vielzahl von elektr. Schaltkreisen verbinden die Stecker in der unteren Kammer des Wagens mit externen Schaltkreisen. Die Bewegbarkeit des Wagens wird durch vier frei lenkbare Räder an den jeweiligen Ecken des Wagens ermöglicht, sowie durch ein fünftes Antriebsrad im Zentrum. Das Antriebsrad wird durch einen elektr. Motor betriebe, der durch eine Batterie gespeist wird.

Die WO 01/77799 A1 offenbart eine Speichereinheit (10) für eine Vielzahl von Computern, wobei die Speichereinheit eine Vielzahl von Computer-Ankoppel-Stationen (25) beinhaltet, welche in einem oder mehreren Modulen von ähnlichen Ankvppel-Stationen angeordnet ist. Die Speichereinheit kann weiterhin Kommunikationsmittel beinhalten, zur Verbindung der Einheit mit einem oder mehreren darin aufgenommenen Computern und/oder anderen ähnlichen Speichereinheiten und/oder mit einem Netzwerk.

Die DE 10065694 A1 offenbart einen Einkaufsroller zum Transportieren einer Last, der freilaufende Räder und ein Raupenfahrwerk hat, mit dem der Einkaufsroller Treppen hinauf- und hinabfahren kann. Wenn der Elektromotor beim Fahren auf einer Treppe ausfällt oder abgestellt wird, hat der Einkaufsroller das Bestreben, auf den Raupenbändern die Treppe abwärts zu rollen, was zu erheblichen Sichefieitsprvblemen führen kann. Um dies zu verhindern, hat der Einkaufsroller eine Rücklaufbremse oder Sperre für die Raupenbänder, wobei beide alternative Sicherheitsmechanismen mit einer Schlingfeder versehen sind.

Die EP 0774403 A1 offenbart ein treppengängiges motorangetriebenes, handgesteuertes Transportgerät mit einer Lastaufnahme, mit einem Räderpaar für den horizontalen Transport sowie mit zwei durch Gleitschienen unterstützte Laufbänder für den Schrägtransport, wobei durch handfreigebende Vorrichtungen die Laufbänder einzeln oder gemeinsam vom motorischen Antrieb entkuppelt werden.

Die Aufgabe der Erfindung ist es deshalb, ein leicht transportfähiges, treppenfahrtaugliches Aufbewahrungssystem vorzuschlagen, mit dem es möglich ist, jeden beliebigen Raum in einem Gebäude zu EDV-Schulungszwecken zu erreichen.

Zur Lösung der gestellten Aufgabe ist die Erfindung durch die technische Lehre des Anspruches 1 gekennzeichnet.

Wesentliches Merkmal der Erfindung ist, dass am Fahrgestell mindestens ein umlaufend angetriebenes Antriebsband angeordnet ist, das mit seinem bodenseitigen Trum auf dem Untergrund aufliegt und das Fahrgestell eine schräg nach oben gerichtete Kufe aufweist, über welche das Antriebsband geleitet ist, welches an seinen Enden über jeweils mindestens eine Umlenkrolle umgelegt ist.

Der fahrbare Aufbewahrungsbehälter besteht dabei im wesentlichen aus einem Fahrgestell, welches über mindestens einen Standfuß mit dem Aufbewahrungsbehälter verbunden ist.

Mit der gegebenen technischen Lehre ergibt sich nun der wesentliche Vorteil, dass durch die Verschiebbarkeit des Aufbewahrungsbehälters mit einem Fahrgestell, und mindestens einem daran ansetzenden Standfuß, der mit dem Aufbewahrungsbehälter verbunden ist, nun erstmals eine hohe Mobilität gegeben ist.

Die Erfindung sieht vor, die Mobilität des Aufbewahrungssystems so weit zu steigern, dass dieses Aufbewahrungssystem auch über entsprechende Treppen mühelos in hoch- oder tiefgelegene Räume transportiert werden kann.

Zu diesem Zweck ist es in einer Ausführungsform vorgesehen, dass das Fahrgestell treppensteigfähig ist und im Fahrgestell mindestens ein umlaufend angetriebener Zahnriemen angeordnet ist, der mit seinem bodenseitigen Trum auf dem Fußboden aufliegt und der an beiden Enden des Fahrgestells über jeweils eine Umlenkrolle umgelegt wird.

Eine dieser Umlenkrollen ist angetrieben, oder es kann eine gesonderte Antriebsrolle vorhanden sein, welche den Zahnriemen antreibt.

Ferner ist es in einer Weiterbildung dieser Idee vorgesehen, dass noch im Abstand von dem Zahnriemen seitlich Gleitriemen angeordnet sind, die ebenfalls über Umlenkrollen laufen, die jedoch nicht angetrieben sind.

Auf diese Weise ist es nun möglich, dass in der Schubkarrenstellung des fahrbaren Aufbewahrungsbehälters dieser an die Vorderkante einer ersten Treppenstufe herangefahren wird, wodurch durch eine schräge Kufe am Fahrgestell, über welche der Zahnriemen geleitet ist, der Zahnriemen in Eingriff mit der Kante der ersten Treppenstufe kommt und hierdurch das Fahrgestell mit dem Aufbewahrungsbehälter auf die erste Treppenstufe schräg hochgezogen wird, um so dann auf die nächste Treppenstufe aufzusetzen und ebenfalls sich an diese Treppenstufe hochzuziehen.

Um eine ausreichende Stabilität eines solchen treppensteigfähigen Aufbewahrungsbehälters zu gewährleisten, ist es in einer Weiterbildung der Erfindung vorgesehen, dass der Standfuß als Kippfuß ausgebildet ist, um so den Schwerpunkt des Aufbewahrungsbehälters nach vorne in Richtung auf die Treppe zu bewegen. Auf diese Weise wird eine zu starke Rückenlage des Aufbewahrungsbehälters vermieden und eine Absturzgefahr auf der Treppe verhindert.

Mit der gegebenen technischen Lehre ergibt sich somit der wesentliche Vorteil, dass auch in engen und alten Treppenhäusern von gegebenenfalls alten Schulungs- und Seminarhäusern ein einwandfreier Transport eines umfangreichen Aufbewahrungsbehälters (mobiles Klassenzimmer) auch in höhergelegene oder tiefergelegene Stockwerke ohne Weiteres möglich ist.

In einer anderen Ausführungsform der Erfindung ist es vorgesehen, dass anstatt der seitlich zum Antriebsriemen befindlichen passiv mitlaufenden Gleitriemen lediglich unbewegte Gleitkufen vorgesehen sind, welche die Seitenstabilität des Aufbewahrungsbehälters insbesondere bei Treppenfahrten erhöhen.

In einer bevorzugten Weiterbildung dieser Ausführungsform der Erfindung sind im Heckbereich noch zusätzliche Lenkrollen angebracht, welche links und rechts des Antriebsriemens angeordnet sind. Insbesondere befinden sich diese Lenkrollen zwischen dem mittigen Antriebsriemen und den beiden links und rechts davon angeordneten Gleitkufen. Es genügen je eine Lenkrolle links und rechts des Antriebsriemens, jedoch können auch mehr als je eine Lenkrolle dort vorgesehen sein. Die Lenkrollen sind insbesondere um ihre Hochachsen frei drehbar und daher lenkbar, so dass dann der gesamte Aufbewahrungsbehälter in der Art eines Einkaufswagens lenkbar ist.

In einer bevorzugten Weiterbildung sind die Lenkrollen in das Fahrgestell ein- und ausschwenkbar und kommen so in oder außer Kontakt mit dem Untergrund.

Soll der Aufbewahrungsbehälter in der Ebene verfahren werden, so werden die Lenkrollen im Heckbereich über die Außenkontur des Fahrgestells nach unten hin ausgeschwenkt und stehen somit auf dem Boden auf. Dadurch wird der mittige Antriebsriemen im hinteren und mittleren Bereich des Aufbewahrungsbehälters angehoben und kommt außer Kontakt mit dem Boden. Lediglich der vorderste Bereich des Antriebsriemens steht dann noch auf dem Boden auf und bildet den bodenseitigen Antrieb für den Aufbewahrungsbehälter.

Soll nun der Aufbewahrungsbehälter über eine Treppe nach oben oder unten in ein anderes Stockwerk verfahren werden, so werden die beiden hinteren Heckrollen nach Positionierung vor der Treppe in die Außenkontur des Fahrwerks nach oben hin eingefahren und der gesamte Aufbewahrungsbehälter steht nun mit seinem Antriebsriemen und ggf. den Gleitschienen auf dem Boden auf. Durch die vordere Schräge des Antriebsriemens kommt dieser in Eingriff mit einer Kante einer Treppenstufe, so dass der Aufbewahrungsbehälter weiter auf die Treppe verfahren wird. Die Lenkrollen sind während des Verfahrens auf der Treppe geschützt im Fahrwerk eingeklappt, so dass eine Beschädigung der Lenkrollen oder der Treppenstufen ausgeschlossen ist und ein ungewolltes Abrutschen des Aufbewahrungsbehälters von der Treppe vermieden wird. Zur besseren Seitenstabilität des Aufbewahrungsbehälters dienen die äußeren Gleitkufen, auf denen der Aufbewahrungsbehälter dann auf den Treppenstufen gleiten kann, falls der Aufbewahrungsbehälter seitlich nach links oder nach rechts verkippen sollte.

Natürlich könnte eine derartige Lenkbarkeit des Aufbewahrungsbehälters auch durch vordere Lenkrollen bewerkstelligt werden, was jedoch eine schwierigere Manövrierfähigkeit mit sich bringt, so dass die hinteren Lenkrollen im Heckbereich bevorzugt werden.

Eine ideale Ausführungsform des Aufbewahrungsbehälters der vorliegenden Erfindung beinhaltet also ein in Längsrichtung ausgerichtetes mittiges bodenseitiges Antriebsband, das sich über die gesamte oder zumindest einen Großteil der Länge des Aufbewahrungsbehälters erstreckt, weiterhin links und rechts davon je eine äußere Gleitkufe und zwischen dem mittigen Antriebsband und den äußeren Gleitkufen je eine Lenkrolle im hinteren Heckbereich, wobei die Lenkrollen je nach Bedarf ein- und ausfahrbar sind, also dann für die Ebenenfahrt Bodenkontakt haben, für die Treppenfahrt dann keinen Bodenkontakt haben.

Wichtig ist also das Vorhandensein mindestens eines in Fahrtrichtung des Aufbewahrungsbehälters weisenden etwa mittigen Antriebsbandes, mindestens je eine Gleitkufe links und rechts des Antriebsbandes und mindestens je eine Lenkrolle links und rechts des Antriebsbandes, insbesondere zwischen dem Antriebsband und den Gleitkufen.

Um den Schwerpunkt der Antriebsbatterien für den Antrieb des Fahrgestells niedrig zu halten, wird es bevorzugt, wenn die Batterien im Fahrgestell angeordnet sind.

Ebenso kann es vorgesehen sein, wenn das Netzteil zur Aufladung der einzelnen Batterien der Notebooks im Fahrgestell angeordnet ist, um auch hier den Schwerpunkt des gesamten Aufbewahrungsbehälters tief zu halten.

In einer Weiterbildung der Erfindung ist es im übrigen vorgesehen, dass der Aufbewahrungsbehälter modular erweiterbar ist. Zu diesem Zweck ist es vorgesehen, dass der Aufbewahrungsbehälter teleskopierbar ausgebildet ist. Dies wird erreicht, indem der Aufbewahrungsbehälter aus mehreren ineinanderverschiebbaren Gehäuseschalen besteht, die auf zwei in parallelen Abstand nebeneinander angeordneten Rahmenholmen verschiebbar angeordnet sind.

Diese modulare Erweiterbarkeit ist besonders günstig, weil die Anzahl der dort aufbewahrten Notebookplätze beliebig erweiterbar ist.

Außerdem ist die Ausziehbarkeit der Gehäuseschalen auch deshalb wichtig, um eine gute Zugänglichkeit in den Innenraum des Aufbewahrungsbehälters zu schaffen. Beispielsweise ist es vorgesehen, dass am Boden des Aufbewahrungsbehälters die Steckplätze für die Aufladung der jeweils zweiten Batterien des jeweiligen Notebooks angeordnet sind und darüber die Notebooks selbst eingesteckt sind. Diese Notebooks können jeweils seitlich aus den entsprechenden Aufbewahrungsschlitzen im Aufbewahrungsbehälter ein- und ausgesteckt werden.

Mit dem Einstecken der Notebooks in die Aufbewahrungsschlitze wird damit gleichzeitig eine Steckverbindung zu einer in der mittleren Ebene des Aufbewahrungsbehälters angeordneten Verbindungsplatine hergestellt, welche die entsprechenden Steckverbindungen zu den einzelnen Notebooks herstellt.

Wichtig ist auch, dass alle Geräte, welche dem Aufbewahrungsbehälter zugeordnet sind, im Innenraum des Aufbewahrungsbehälters angeordnet sind, um so eine geschlossene Gehäuseschale zu bieten und die Geräte vor eventueller Beschädigung zu schützen.

Die Geräte sind auch miteinander verkabelt und funktionsfähig zusammen angeschlossen, so dass der Aufbewahrungsbehälter für sich allein genommen auch arbeitsfähig ist. Es bedarf keiner zusätzlichen Verkabelungen mehr, keines zusätzlichen Anschlusses von Peripheriegeräten, da alle notwendigen Geräte in dem Aufbewahrungsbehälter selbst integriert werden können.

Zusätzlich sieht eine Weiterbildung der Erfindung vor, dass an einer der Außenseiten des Aufbewahrungsbehälters entsprechende Peripherieschnittstellen angeordnet sind, über die beispielsweise eine Digitalkamera, ein Audiosystem oder andere beliebige Zusatzmodule angeschlossen werden können.

Im Folgenden wird die Erfindung anhand von lediglich einen Ausführungsweg darstellenden Zeichnungen näher erläutert. Hierbei gehen aus den Zeichnungen und ihrer Beschreibung weitere Merkmale und Vorteile der Erfindung hervor.

Es zeigen:
- Figur 1:: perspektivische Ansicht des fahrbaren Aufbewahrungsbehälter in der Grundstellung;
- Figur 2:: Draufsicht auf die Anordnung nach Figur 1;
- Figur 3:: Querschnitt durch den Aufbewahrungsbehälter;
- Figur 4:: einen Längsschnitt durch den Aufbewahrungsbehälter nach Figur 1;
- Figur 5:: die Steigfunktion des Aufbewahrungsbehälters beim Überfahren einer Treppe;
- Figur 6:: Zu den Figuren 1-5 alternative Ausführungsform eines treppentauglichen Aufbewahrungsbehälters in einer perspektivischen Darstellung;
- Figur 7:: Aufbewahrungsbehälter nach Figur 6 in Vorderansicht;
- Figur 8:: Aufbewahrungsbehälter nach Figur 6 in Unteransicht;
- Figur 9:: Aufbewahrungsbehälter nach Figur 6 in einer Seitenansicht;
- Figur 10:: Aufbewahrungsbehälter nach Figur 6 in einer Draufsicht.

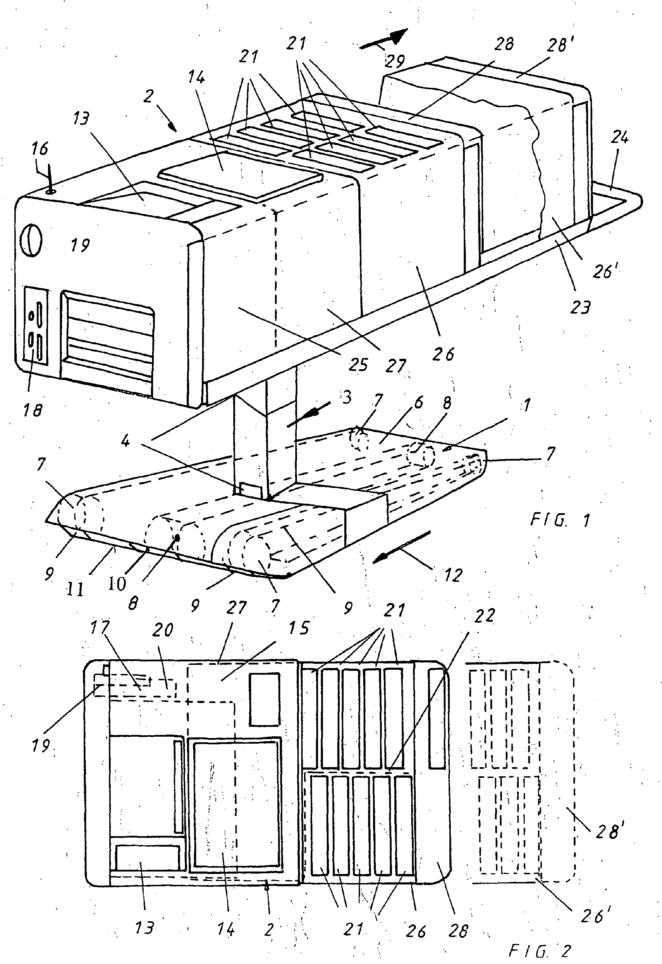

Der fahrbare Aufbewahrungsbehälter nach der Erfindung besteht gemäß Figur 1 im wesentlichen aus einem unteren, bodenseitigen Fahrgestell 1, einem über einen Kupplungsbeschlag 4 daran ansetzenden Standfuß 3 und einem über einen weiteren Kupplungsbeschlag 4 daran ansetzenden Aufbewahrungsbehälter 2.

Die Erfindung ist nicht auf die Anordnung eines einzigen Standfußes 3 beschränkt. Es können auch mehrere Standfüße parallel nebeneinander auf dem Fahrgestell 1 angeordnet sein.

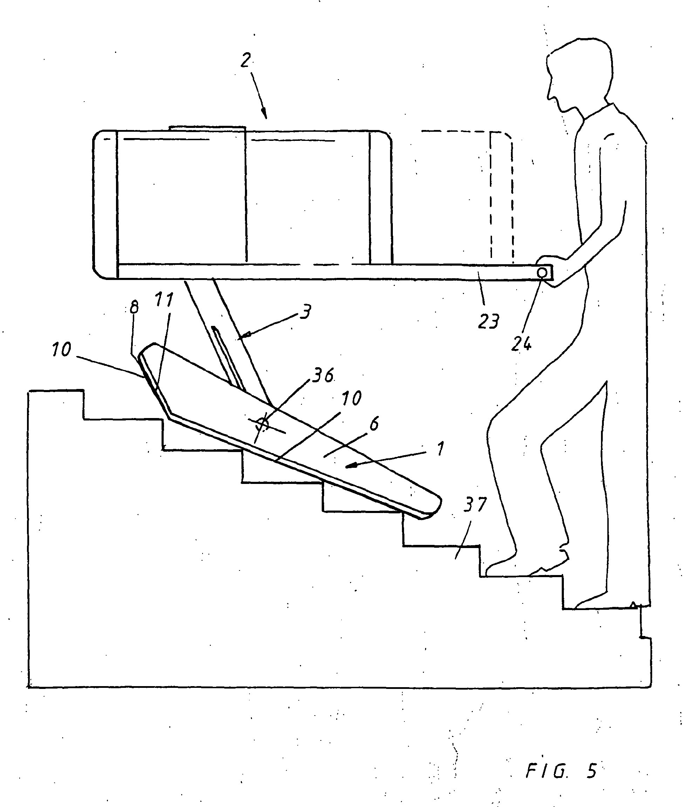

Die Oberseite des Fahrgestells 1 wird durch eine Abdeckhaube 6 gebildet, welche die darin angeordnete Antriebseinheit abdeckt. In dem gezeigten Ausführungsbeispiel nach Figur 1 und Figur 5 ist ein treppensteigfähiges Fahrgestell 1 dargestellt.

Zu diesem Zweck sind im Innenraum des Fahrgestells 1 insgesamt drei vordere Umlenkrollen 7, 8 angeordnet, wobei lediglich die vorderen Umlenkrollen 7, 8 dargestellt sind. Die äußeren Umlenkrollen 7 sind passiv ausgebildet, das heißt sie sind drehbar im Fahrgestell 1 gelagert und werden von einem Gleitriemen 9 jeweils umgriffen, der über gleiche hintere Umlenkrollen 7 am Fahrgestell 1 umgelenkt ist.

Der Gleitriemen 9 ist also ein umlaufendes Bandtrum, welches mit seinem bodenseitigen Trum auf dem Fußboden aufliegt und so eine Gleitfläche für das Fahrgestell 1 bildet.

Im mittleren Teil des Fahrgestells 1 ist hierbei eine vordere und eine hintere, drehbar angetriebene, Umlenkrolle 8 angeordnet, die von jeweils einem als Bandtrum ausgebildeten Zahnriemen 10 umschlungen ist.

Selbstverständlich kann es auch vorgesehen sein, dass zum Antrieb des Zahnriemens noch eine eigene Antriebsrolle verwendet wird.

Der Antrieb des Zahnriemens ist nicht näher dargestellt. Er besteht im wesentlichen aus einem Antriebsmotor, und einer dazugehörenden Energieversorgung, insbesondere einer Batterie.

Der vordere Teil des Fahrgestells 1 ist durch eine schräg nach oben gerichtete Kufe 11 gebildet, so dass der drehend angetriebene Zahnriemen 10 gemäß Figur 5 mit seiner schrägen Fläche beim Auffahren auf eine Treppenstufe 37 deren Kante erfasst und sich über die Treppenstufe hinaufzieht.

Somit ist der gesamte fahrbare Aufbewahrungsbehälter, bestehend aus dem Aufbewahrungsbehälter 2, dem Standfuß 3 und dem Fahrgestell 1, in Pfeilrichtung 12 verfahrbar. Selbstverständlich kann er auch in Rückwärtsrichtung verfahren werden.

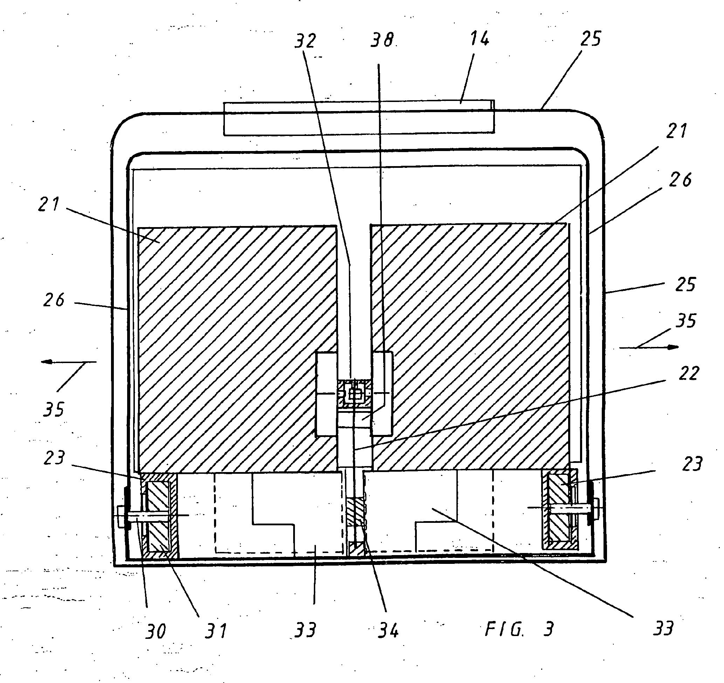

Der Aufbewahrungsbehälter 2 besteht aus einem etwa kastenförmigen Behälter, der aus mehreren ineinander verschiebbaren Gehäuseschalen besteht. In einer feststehenden Gehäuseschale 25 - welche gemäß Figur 3 außenliegend angeordnet ist - sind zwei innenliegende Gehäuse schalen 26, 27 verfahrbar angeordnet.

In der vorderen, feststehenden Gehäuseschale 25 ist beispielsweise ein Drucker 13 angeordnet, auf dem ein Scanner 14 angeordnet ist. Es ist ferner eine Antenne 16 für die Funkverbindung zu den einzelnen Notebooks 21 vorgesehen, und eine dazugehörende Funkstation 17 ist ebenfalls im vorderen Teil der Gehäuseschale 25 angeordnet.

Ferner ist ein Digitalprojektor 20 mit einer frontseitigen Projektionslinse 19 vorgesehen, und am vorderen Teil der Gehäuseschale 25 ist eine Schnittstelle 18 für den Anschluss peripherer Geräte vorgesehen.

Im Bereich der feststehenden Gehäuseschale 25 ist auch noch das Netzteil 15 für die Ladung der einzelnen Notebooks und die Aufladung der zweiten Batterien vorgesehen, die mit Ziffer 33 in Figur 3 dargestellt sind.

Aus Gewichtsersparnisgründen kann es auch vorgesehen sein, dass das Netzteil 15 im Fahrgestell 1 angeordnet ist.

Im Anschluss an die feststehende Gehäuseschale 25 erstrecken sich zwei verfahrbare Gehäuseschalen 26, 27 zueinander, die teleskopartig ineinander verschiebbar sind. In der Darstellung nach Figur 1 ist die eine innere Gehäuseschale 27 noch in die Gehäuseschale 25 eingreifend dargestellt. Sie kann herausgezogen werden, wodurch die Gehäuseschale 27 dann an den Ort der Gehäuseschale 26 gelangt und die Gehäuseschale 26 an den Ort der dort dargestellten Gehäuseschale 26'. Auf diese Weise kann der Aufbewahrungsbehälter 2 um einen wesentlichen Teil nach hinten verlängert werden.

Die Gehäuseschale 26 ist bevorzugt aus einem durchsichtigen Kunststoffmaterial ausgebildet, um die Anordnung der einzelnen, dahinter eingesteckten, Notebooks 21 zu ermöglichen.

Um den Zugriff zu den einzelnen Notebooks zu ermöglichen, kann die Gehäuseschale 26 beispielsweise in Pfeilrichtung 12 auf die innere Gehäuseschale 27 verschoben werden, und sie kann auch in Gegenrichtung hierzu an den Ort der Gehäuseschale 26' verschoben werden.

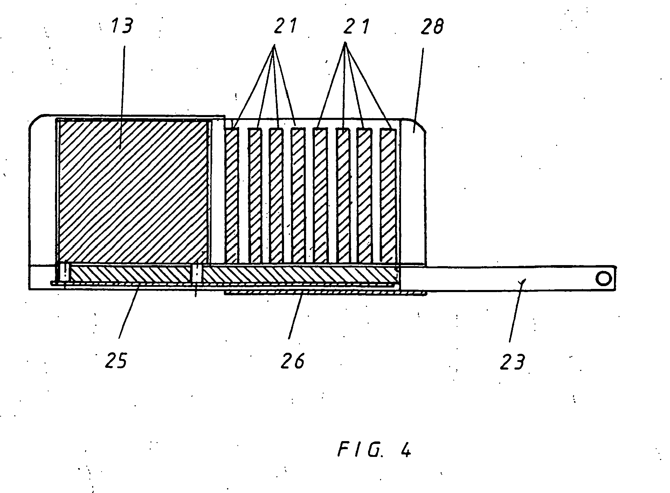

Wichtig ist, dass im Innenraum des Aufbewahrungsbehälters 2 einzelne Aufbewahrungsschlitze angeordnet sind, wie sie schematisiert in Figur 4 dargestellt sind. In diese Aufbewahrungsschlitze werden nun die Notebooks 21 seitlich eingeschoben (nämlich in Pfeilrichtung 35 und in Gegenrichtung hierzu), und beim Einschieben gelangen die entsprechenden Steckanschlüsse an der Rückseite des jeweiligen Notebooks 21 in Funktionseingriff mit zugeordneten Steckanschlüssen 38, die im Bereich einer T-Ankerschiene 32 angeordnet sind. Die T-Ankerschiene 32 dient zur Stabilisierung der Stecklage der einzelnen Notebooks 21 und ist mit einer Verbindungsplatine 22 verbunden, die gegebenenfalls noch höheneinstellbar ausgebildet ist. Diese Verbindungsplatine 22 stellt die elektrische Verbindung zu den übrigen Funktionsteilen im Innenraum des Aufbewahrungsbehälters 2 her, nämlich insbesondere zu dem Drucker 13, dem Scanner 14, der Funkstation 17 usw.

An der Verbindungsplatine 22 können noch Anschlussstecker 34 für das Einstecken von Reserve-Akkus 33 vorgesehen werden, damit Reserve-Akkus für das jeweilige Notebook 21 verwendet werden können.

Hieraus ergibt sich, dass die Akkus 33 im Bodenbereich des Aufbewahrungsbehälters 2 an die Anschlussstecker 34 angeschlossen sind, während darüber liegend die einzelnen Notebooks in die horizontal seitlich geöffneten Einschubschlitze eingesteckt sind und mit ihrem Bodenbereich jeweils auf zwei einander gegenüberliegenden und etwa horizontal verlaufenden, sowie zueinander parallelen Rahmenholmen 23 aufliegen.

Die Figur 3 zeigt, dass die Rahmenholme 23 etwa als U-förmiges Profil ausgebildet sind, in deren Innenraum die Rollen 31 für den Verschiebeantrieb der Gehäuseschalen 26, 27 laufen. Jede Rolle ist drehbar auf einer zugeordneten Achse 30 gelagert, und die jeweilige Achse 30 ist mit der Gehäuseschale 26 oder der Gehäuseschale 27 jeweils verbunden.

Die hinteren Enden der beiden Rahmenholme 23 sind mit einem Schubbügel 24 verbunden, so dass das gesamte Aufbewahrungssystem in der Art einer Schubkarre bewegt werden kann.

Es wird noch hinzugefügt, dass im hinteren Teil der Gehäuseschale 26 ein Audiosystem 28 angeordnet ist.

Mit der Pfeilrichtung 29 ist die Teleskopierbarkeit der einzelnen Gehäuseschalen 26, 26' zueinander dargestellt.

Die Figur 5 zeigt nun die Treppensteigfähigkeit des gesamten fahrbaren Aufbewahrungsbehälters.

Hierzu ist es vorgesehen, dass der Standfuß 3 im Fahrgestell eine Kippachse 36 ausbildet, so dass der Standfuß schräg nach vorne geneigt ist.

Zwar ist in Figur 5 der Standfuß 3 schräg dargestellt, dies ist jedoch nur aus zeichnerischen Gründen erfolgt. In Wirklichkeit ist im Verbindungsbereich des oberen Kupplungsbeschlages 4 zwischen dem Aufbewahrungsbehälter 2 und dem Standfuß 3 kein Kippgelenk vorgesehen.

Selbstverständlich kann es in einer Weiterbildung der vorliegenden Erfindung auch vorgesehen sein, in diesem Bereich ein Kippgelenk anzuordnen.

Die Figur 5 zeigt nun die einfache Transportierbarkeit des gesamten Aufbewahrungsbehälters. Der Benutzer muss nur den hinteren Schubbügel 24 greifen und das Gerät in Richtung auf eine vordere Treppenstufe 37 fahren, solange bis die Vorderkante des Zahnriemens 10 im Eingriff mit der untersten Treppenstufe 37 gelangt. Sodann zieht sich das Fahrgestell 1 durch den Drehantrieb des Zahnriemens 10 über alle weiteren Treppenstufen hinüber, wodurch ein besonders einfacher Transport ermöglicht wird.

Diese schubkarrenartige Transportmöglichkeit ist eine besonders einfache und kostengünstige Form des Transportes. Es ist bekannt, dass ein derartiges Gerät ein relativ hohes Gewicht hat, was verhindert, dass eine Person das System noch tragen kann. Beim Tragen durch mehrere Personen ist die Transportierbarkeit stark eingeschränkt, wenn es darum geht, enge Treppenhäuser zu überwinden. Aus diesem Grunde sieht eine Weiterbildung der Erfindung das schubkarrenartige Transportsystem mit einem treppensteigfähigen Fahrgestell vor, welches ebenfalls den Transport durch enge und steile Treppenhäuser ermöglicht.

Mit einem solchen Transportsystem wird sichergestellt, dass das System beim Transportieren nicht beschädigt wird und insbesondere die im Aufbewahrungsbehälter 2 angeordneten Geräte nicht herausfallen oder in anderer Weise beschädigt werden.

Die schubkarrenartige Ausbildung des Fahrgestells hat auch den Vorteil, dass unabhängig von dem Antrieb des Fahrgestells eine besonders leichte Transportierbarkeit gegeben ist. Bereits beim Überfahren von Stufen oder Schwellen (Türschwelle oder Türanschlägen) gelingt es bei derartig schweren Aufbewahrungsbehältern nicht mehr, diese ohne Anheben über die Schwelle zu befördern. Dies gelingt mit der Weiterbildung der Erfindung durch die schubkarrenartige Lösung dadurch, dass im vorderen Bereich des Fahrgestells entsprechende Überfahrrollen angeordnet sind, die beim Anheben des Aufbewahrungsbehälters die Schwelle überwinden.

Mit der Anordnung von (gegebenenfalls nicht einmal angetriebenen) umlaufenden Bändern ergibt sich der weitere Vorteil, dass das Fahrgestell bodenunabhängig wird. Dies bedeutet, dass der Transport des Fahrgestells über unregelmäßige, ungleiche und gegebenenfalls auch raue Böden ohne Weiteres möglich ist, weil anstatt des Abrollens einzelner Rollen Gleitbänder verwendet werden, die einen besonders einfachen Transport des gesamten Aufbewahrungsbehälters ermöglichen.

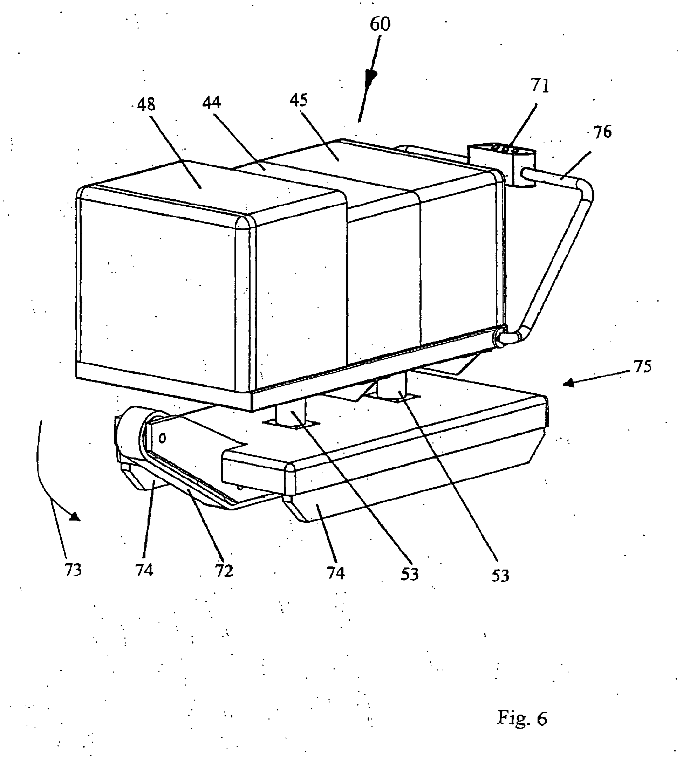

Nach den Figuren 6 bis 10 ist der gesamte Aufbewahrungsbehälter 60 mit mindestens einem Stützfuß 53 (hier zwei feststehende Stützfüße 53) auf einem Fahrgestell 75 gelagert, wobei dieser Stützfuß 53 gegebenenfalls noch höhenverstellbar und/oder drehbar ausgebildet ist.

Anstelle eines einzigen Stützfußes 53 können selbstverständlich auch mehrere Stützfüße oder eine andere Verbindung zwischen einem Grundträger eines Aufbewahrungsbehälters 60 und einem darunter angeordneten Fahrgestell 75 vorgenommen werden.

Das Fahrgestell 75 in seiner einfachsten Ausführungsform weist mindestens zwei lenkbare Laufrollen 55 im Heckbereich auf, sowie ein mittleres Antriebsband 72 und links und rechts davon je eine Gleitschiene 74.

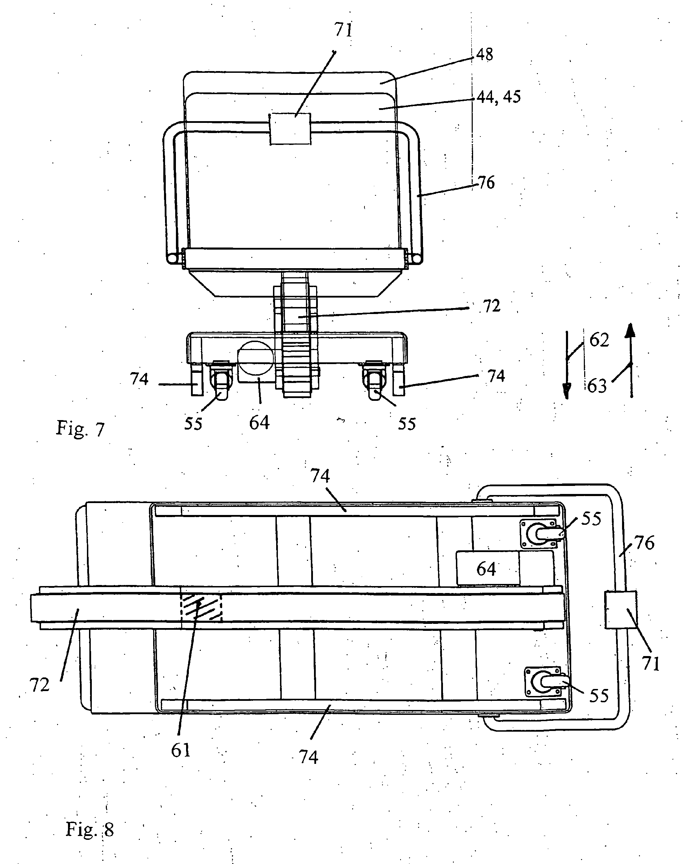

Die Figuren 6 bis 10 zeigen ein treppensteigtaugliches Aufbewahrungssystem, wo erkennbar ist, dass ein Fahrgestell 75 seitliche Gleitschienen 74 aufweist und dazwischen ein Antriebskörper angeordnet ist, der im Wesentlichen aus einem in Pfeilrichtung 73 und in Gegenrichtung hierzu antreibbaren Antriebsband 72 besteht, wobei dieses Antriebsband 72 gemäß Figur 7 entsprechende Vorsprünge, Noppen oder Rippen hat, um so an einer höhenversetzten Kante einer Treppe anzugreifen und das gesamte Fahrgestell 75 über diese Kante der Treppe hinauf zu befördern.

Auf diese Weise kann das gesamte Aufbewahrungssystem eine Treppe besteigen oder von dieser Treppe herabgefahren werden.

An der Rückseite des Aufbewahrungssystems ist jeweils ein Handgriff 76 angeordnet, an dem ein oder mehrere Bedienungskonsolen 71 für die elektrischen Antriebe und dergleichen vorgesehen sind. Die Bedienungskonsolen 71 beinhalten mindestens einen Ein-/Ausschalter, einen Notausschalter und einen Schalter für das Vorwärts-/Rückwärtsfahren.

Das in Längsrichtung des Aufbewahrungssystems mittig sich erstreckende Antriebsband 72 ist über drei Umlenkrollen 68-70 geführt und wird durch eine verschiebbare Spannrolle 67 im gespannten Zustand gehalten. Die vorderste Umlenkrolle 68 ist dabei wesentlich höher angeordnet, als die anderen beiden Umlenkrollen 69, 70, so dass das Antriebsband 72 im Frontbereich eine Kufe 59 hat und im Winkel 66 zum Bodentrum 65 des Antriebsbands 72 verläuft, was das Auf- und Abfahren auf und von Treppen erleichtert.

Der Antrieb für das Antriebsband 72 erfolgt über einen Elektromotor 64, der ggf. über ein Getriebe die hinterste Umlenkrolle 70 antreibt.

Wesentlich für diese Variante des treppentauglichen Aufbewahrungssystems ist nun, dass die im Heckbereich des Aufbewahrungssystems angeordneten Lenkrollen 55, die sich links und rechts des mittigen Antriebsbands 72 und links und rechts der mittigen hintersten Umlenkrolle 70 befinden, hinter die Außenkontur des Fahrgestells 75 in Pfeilrichtung 63 nach oben einschwenkbar sind und aus dieser wieder in Pfeilrichtung 62 nach unten hin herausschwenkbar sind. Dies wird insbesondere durch ein herkömmliches Scharnier bewerkstelligt und kann sowohl manuell, wie auch motorisch angetrieben erfolgen. Natürlich sind auch andere Ein- und Ausschwenkmechanismen für die Lenkrollen 55 denkbar, wie z.B. Langlochverstellung, Excenterverstellung, Hubzylinderverstellung etc..

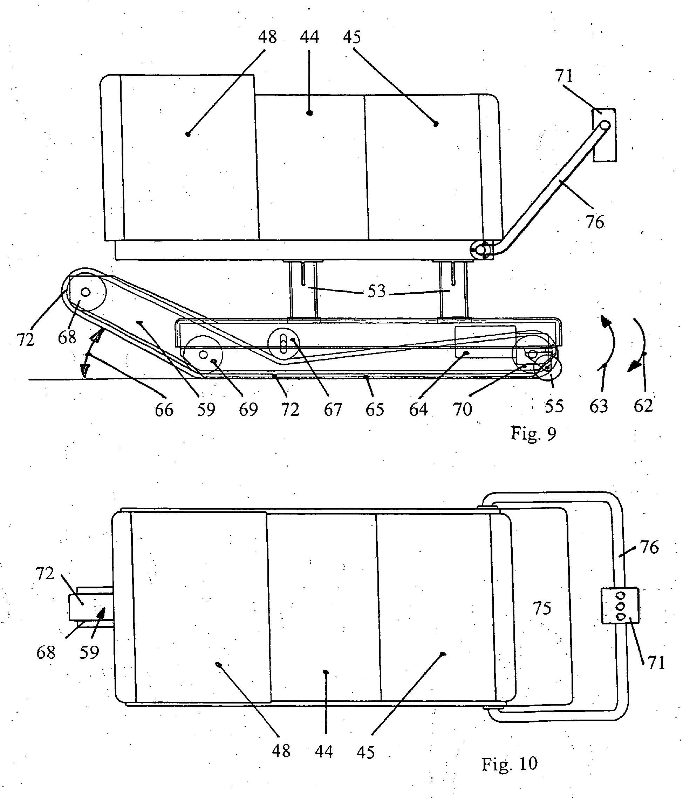

In den Figuren 7 und 9 sind die Lenkrollen 55 im Ausschwenkzustand dargestellt, so dass das gesamte Aufbewahrungssystem mit nur drei Bereichen auf dem Boden aufliegt, nämlich mit den beiden hinteren Lenkrollen 55, sowie mit einem vorderen Bereich 61 des Antriebsbandes 72, wie er in Figur 8 eingezeichnet ist. Dieser Zustand wird beim Fahren des Aufbewahrungssystems in der Ebene verwendet, da dann das Aufbewahrungssystem durch die beiden hinteren Lenkrollen 55 gelenkt werden kann und durch den vorderen Bereich 61 des Antriebsbandes 72 angetrieben werden kann.

Soll nun das gesamte Aufbewahrungssystem über eine Treppe verfahren werden, so wird das Aufbewahrungssystem zunächst mit ausgefahrenen Lenkrollen 55 in Position vor die Treppe gebracht, danach beide Lenkrollen 55 eingefahren, bis diese über den Kufen 74 und über dem Antriebsband 72 im Fahrgestell 75 sich befinden und dann das Aufbewahrungssystem auf dem gesamten Antriebsband 72 aufliegt und ggf. auf den Gleitkufen 74. Danach kann das Aufbewahrungssystem über das Antriebsband 72 angetrieben auf die Treppe gefahren werden und dank der beiden Kufen 74 links und rechts des Antriebsbands 72 als Seitenstabilisierung über die Treppe zum nächsten ebenen Niveau gefahren werden, auf dem dann die Lenkrollen 55 wiederum ausgefahren werden, damit das Aufbewahrungssystem lenkbar ist.

### Zeichnungslegende

- 1: Fahrgestell
- 2: Aufbewahrungsbehälter
- 3: Standfuß
- 4: Kupplungsbeschlag
- 5: -
- 6: Abdeckhaube
- 7: Umlenkrolle (passiv)
- 8: Umlenkrolle (angetrieben)
- 9: Gleitriemen
- 10: Zahnriemen
- 11: Kufe
- 12: Pfeilrichtung
- 13: Drucker
- 14: Scanner
- 15: Netzteil
- 16: Antenne
- 17: Funkstation
- 18: Schnittstelle
- 19: Projektionslinse
- 20: Digitalprojektor
- 21: Notebooks
- 22: Verbindungsplatine
- 23: Rahmenholm
- 24: Schubbügel
- 25: Gehäuseschale (außen)
- 26: Gehäuseschale (innen) 26'
- 27: Gehäuseschale (innen)
- 28: Audio-System
- 29: Pfeilrichtung
- 30: Achse
- 31: Rolle

- 32: T-Ankerschiene
- 33: Akku
- 34: Anschlussstecker
- 35: Pfeilrichtung
- 36: Kippachse
- 37: Treppenstufe
- 38: Steckanschluss
- 39: -
- 40: -
- 41: -
- 42: -
- 43: -
- 44: Haube
- 45: Haube
- 46: -
- 47: -
- 48: Haube
- 49: -
- 50: -
- 51: -
- 52: -
- 53: Stützfuß
- 54: -
- 55: lenkbare Laufrolle (Lenkrolle)
- 56: -
- 57: -
- 58: -
- 59: Kufe
- 60: Aufbewahrungsbehälter
- 61: vorderer Bereich von 72
- 62: Ausschwenkrichtung von 55
- 63: Einschwenkrichtung von 55
- 64: Elektromotor
- 65: Bodentrum

- 66: Winkel
- 67: Spannrolle
- 68: Umlenkrolle
- 69: Umlenkrolle
- 70: Umlenkrolle
- 71: Bedienungskonsole
- 72: Antriebsband
- 73: Pfeilrichtung
- 74: Gleitschiene
- 75: Fahrgestell
- 76: Handgriff

## Patentansprüche

1. Fahrbarer Aufbewahrungsbehälter (2, 60) für mobile Rechner und/oder periphere Geräte, mit einem fahrbaren Fahrgestell (1, 75), welches über mindestens einen Standfuß (3, 53) mit dem Aufbewahrungsbehälter (2, 60) verbunden ist, **dadurch gekennzeichnet, dass** am Fahrgestell (1, 75) mindestens ein umlaufend angetriebenes Antriebsband (10, 72) angeordnet ist, das mit seinem bodenseitigen Trum (65) auf dem Untergrund aufliegt und das Fahrgestell (1) eine schräg nach oben gerichtete Kufe (11, 59) aufweist, über welche das Antriebsband (10, 72) geleitet ist, welches an seinen Enden über jeweils mindestens eine Umlenkrolle (8; 68,70) umgelegt ist.

2. Fahrbarer Aufbewahrungsbehälter (2, 60) nach Anspruch 1, **dadurch gekennzeichnet, dass** das Antriebsband (10, 72) als Zahnriemen ausgebildet ist.

3. Fahrbarer Aufbewahrungsbehälter (2, 60) nach Anspruch 1, **dadurch gekennzeichnet, dass** das Antriebsband (10, 72) auf der äußeren Lauffläche Vorsprünge, Noppen oder Rippen hat, um so an einer höhenversetzten Kante einer Treppe anzugreifen und das gesamte Fahrgestell (1, 75) Ober diese Kante der Treppe hinauf zu befördern.

4. Fahrbarer Aufbewahrungsbehälter (2, 60) nach einem der Ansprüche 1 bis 3, **dadurch gekennzeichnet, dass** mindestens ein mittig im Fahrgestell (75) angeordnetes Antriebsband (10, 72) vorgesehen ist und links und rechts davon mindestens je eine Gleitkufe (74) und/oder mindestens je ein Gleitband (9).

5. Fahrbarer Aufbewahrungsbehälter (2, 60) nach Anspruch 4, **dadurch gekennzeichnet, dass** das mindestens je eine Gleitband (9) selbst nicht angetrieben ist, sondern an seinen Enden über jeweils mindestens eine Umlenkrolle (7) umgelegt ist, auf dem Untergrund aufliegt und passiv mitläuft.

6. Fahrbarer Aufbewahrungsbehälter (2, 60) nach den Ansprüchen 1 bis 5, **dadurch gekennzeichnet, dass** in dem bodenseitigen Fahrgestell (1, 75) mindestens zwei lenkbare Rollen (55) im hinteren Heckbereich oder im vorderen Frontbereich angeordnet sind.

7. Fahrbarer Aufbewahrungsbehälter (2, 60) nach Anspruch 6, **dadurch gekennzeichnet, dass** die lenkbaren Rollen (55) wiederholt aus der Außenkontur des Fahrgestells (75) ausschwenkbar sind, so dass die Rollen (55) auf dem Untergrund aufliegen, zusammen mit nur einem vorderen Bereich (61) oder hinteren Bereich des Antriebsbandes (72).

8. Fahrbarer Aufbewahrungsbehälter (2, 60) nach den Ansprüchen 1 bis 7, **dadurch gekennzeichnet, dass** im Fahrgestell (1, 75) mindestens ein elektrisches Antriebsmittel (64) angeordnet ist, das mindestens eine der Rollen (7; 68-70) drehbar antreibt.

9. Fahrbarer Aufbewahrungsbehälter (2, 60) nach den Ansprüchen 1 bis 8, **dadurch gekennzeichnet, dass** der Standfuß (3) als Kippfuß ausgebildet ist.

10. Fahrbarer Aufbewahrungsbehälter (2, 60) nach den Ansprüchen 1 bis 9, **dadurch gekennzeichnet, dass** der Aufbewahrungsbehälter (2, 60) an seiner hinteren Seite einen Schubbügel (24, 76) aufweist und der gesamte Aufbewahrungsbehälter (2, 60) an dem Schubbügel (24, 76) heb- und kippbar ist.

11. Fahrbarer Aufbewahrungsbehälter (2, 60) nach den Ansprüchen 1 bis 10, **dadurch gekennzeichnet, dass** die für den Antrieb des Fahrgestells notwendigen Antriebsbatterien für einen niedrigen Schwerpunkt im Fahrgestell (1, 75) angeordnet sind.

12. Fahrbarer Aufbewahrungsbehälter (2, 60) nach den Ansprüchen 1 bis 11, **dadurch gekennzeichnet, dass** der Aufbewahrungsbehälter (2, 60) aus mehreren, ineinander verschiebbaren, Gehäuseschalen (25-27; 44,45,48) besteht, die auf zwei in parallelem Abstand nebeneinander angeordneten Rahmenholmen (23) verschiebbar angeordnet sind und der Aufbewahrungsbehälter (2, 60) modular erweiterbar ist.

13. Fahrbarer Aufbewahrungsbehälter (2, 60) nach den Ansprüchen 1 bis 12, **dadurch gekennzeichnet, dass** der Aufbewahrungsbehälter (2, 60) am Boden Steckplätze für die Aufladung einer zweiten Batterie (33) eines Notebooks (21) aufweist und die Notebooks (21) über Steckanschlüsse (38) mit einer Verbindungsplatine (22) verbunden sind, welche eine elektrische Verbindung zu den Notebooks (21) oder anderen Funktionsteilen herstellt.

14. Fahrbarer Aufbewahrungsbehälter (2, 60) nach den Ansprüchen 1 bis 13, **dadurch gekennzeichnet, dass** an einer der Außenseiten des Aufbewahrungsbehälters (2, 60) mindestens eine Peripherieschnittstelle (18) für den Anschluss peripherer Geräte angeordnet ist.

15. Aufbewahrungsbehälter (2, 60) nach den Ansprüchen 1 bis14, **dadurch gekennzeichnet, dass** die Geräte miteinander verkabelt und funktionsfähig zusammen angeschlossen sind und dass der Aufbewahrungsbehälter (2, 60) für sich allein genommen arbeits- und funktionsfähig ist.

16. Fahrbarer Aufbewahrungsbehälter (2, 60) nach den Ansprüchen 1 bis 15, **dadurch gekennzeichnet, dass** der Aufbewahrungsbehälter (2, 60) zur Aufnahme von Notebooks (21), Drucker (13), Scanner (14) und Digitalprojektoren für den mobilen Transport vorgesehen ist.

## Claims

1. Mobile storage container (2, 60) for mobile computers and/or peripheral equipment, with a mobile carriage (1, 75) connected to the storage container (2, 60) by at least one supporting leg (3, 53), **characterized in that** at least one endless driving belt (10, 72) is arranged on the carriage (1, 75) with its bottom strand (65) in contact with the supporting surface, and the carriage (1) has an obliquely upwards directed skid (11, 59) over which the driving belt (10, 72) is led with each end of the said driving belt passing around at least one return pulley (8; 68, 70).

2. Mobile storage container (2, 60) according to Claim 1, **characterized in that** the driving belt (10, 72) is configured as a toothed belt.

3. Mobile storage container (2, 60) according to Claim 1, **characterized in that** the driving belt (10, 72) has projections, knobs or ribs on its outer running face to engage the raised edge of a step and propel the whole carriage (1, 75) up over this edge of the step.

4. Mobile storage container (2, 60) according to any one of Claims 1 to 3, **characterized in that** at least one driving belt (10, 72) arranged centrally in the carriage (75) is provided, and at least one skid runner (74) and/or at least one glide belt (9) is provided on the left and right thereof.

5. Mobile storage container (2, 60) according to Claim 4, **characterized in that** the at least one glide belt (9) is not itself driven, but passes around at least one return pulley (7) at each of its ends, is in contact with the supporting surface, and passively co-rotates.

6. Mobile storage container (2, 60) according to Claims 1 to 5, **characterized in that** at least two steerable rollers (55) are arranged in the rear or forward region of the bottom carriage (1, 75).

7. Mobile storage container (2, 60) according to Claim 6, **characterized in that** the steerable rollers (55) can be repeatedly extended beyond the outer contour of the carriage (75) so that the rollers (55) are in contact with the supporting surface together with just a forward region (61) or rear region of the driving belt (72).

8. Mobile storage container (2, 60) according to Claims 1 to 7, **characterized in that** at least one electrical drive means (64) which drives at least one of the rollers (7; 68-70) in rotation is arranged in the carriage (1, 75).

9. Mobile storage container (2, 60) according to Claims 1 to 8, **characterized in that** the supporting leg (3) is configured as a tilting leg.

10. Mobile storage container (2, 60) according to Claims 1 to 9, **characterized in that** the storage container (2, 60) has a push bar (24, 76) at its rear end, and the whole storage container (2, 60) can be raised and tilted from the push bar (24, 76).

11. Mobile storage container (2, 60) according to Claims 1 to 10, **characterized in that** the drive batteries necessary for the drive to the carriage are arranged in the carriage (1, 75) for a low centre of gravity.

12. Mobile storage container (2, 60) according to Claims 1 to 11, **characterized in that** the storage container (2, 60) consists of a plurality of telescoping casing-shells (25-27; 44, 45, 48) displaceably arranged on two frame side bars arranged parallel with each other and spaced apart, and the storage container (2, 60) is modularly extensible.

13. Mobile storage container (2, 60) according to Claims 1 to 12, **characterized in that** the storage container (2, 60) has module slots at the bottom for charging a second battery (33) of a notebook (21), and the notebooks (21) are connected by plug connections (38) to a connection board (22) which makes an electrical connection to the notebooks (21) or other functional items.

14. Mobile storage container (2, 60) according to Claims 1 to 13, **characterized in that** at least one peripheral interface (18) for connection of peripheral equipment is arranged on one of the outer sides of the storage container (2, 60).

15. Storage container (2, 60) according to Claims 1 to 14, **characterized in that** the equipment items are cabled to each other and functionally connected together and **in that** the storage container (2, 60) is independently operable and functional.

16. Mobile storage container (2, 60) according to Claims 1 to 15, **characterized in that** the storage container (2, 60) is intended to hold notebooks (21), printers (13), scanners (14) and digital projectors for mobile transport.

## Revendications

1. Coffre de rangement mobile (2, 60) pour des ordinateurs et/ou des appareils périphériques mobiles, comportant un châssis roulant (1, 75) qui est relié par au moins un pied (3, 53) au coffre de rangement (2, 60), **caractérisé en ce qu'**il est prévu sur le châssis roulant (1, 75) au moins une bande d'entraînement sans fin (10, 72) qui est posée avec son brin inférieur (65) sur le sol, et le châssis roulant (1) comporte un patin (11, 59), dirigé en biais vers le haut, par l'intermédiaire duquel est dirigée la bande d'entraînement (10, 72) qui passe au niveau de chaque extrémité sur au moins une poulie de renvoi (8 ; 68, 70).

2. Coffre de rangement mobile (2, 60) selon la revendication 1, **caractérisé en ce que** la bande d'entraînement (10, 72) est conçue comme une courroie dentée.

3. Coffre de rangement mobile (2, 60) selon la revendication 1, **caractérisé en ce que** la bande d'entraînement (10, 72) a sur sa surface de roulement extérieure des saillies, des bosses ou des nervures afin d'agir ainsi sur un bord surélevé d'un escalier et de faire monter tout le châssis roulant (1, 75) sur ce bord de l'escalier.

4. Coffre de rangement mobile (2, 60) selon l'une des revendications 1 à 3, **caractérisé en ce qu'**il est prévu au moins une bande d'entraînement (10, 72) disposée au centre du châssis roulant (75), et un patin (74) et/ou au moins une bande de glissement (9) à gauche et à droite.

5. Coffre de rangement mobile (2, 60) selon la revendication 4, **caractérisé en ce que** la ou les bandes de glissement (9) ne sont pas entraînées elles-mêmes, mais passent à chaque extrémité sur au moins une poulie de renvoi (7), sont posées sur le sol et sont entraînées passivement.

6. Coffre de rangement mobile (2, 60) selon les revendications 1 à 5, **caractérisé en ce qu'**il est prévu dans le châssis roulant situé côté sol (1, 75) au moins deux roulettes orientables (55) dans la zone arrière ou dans la zone avant.

7. Coffre de rangement mobile (2, 60) selon la revendication 6, **caractérisé en ce que** les roulettes orientables (55) sont aptes à être déployées de manière répétée hors du contour extérieur du châssis roulant (75), de sorte qu'elles sont posées sur le sol, avec seulement une zone avant (61) ou une zone arrière de la bande d'entraînement (72).

8. Coffre de rangement mobile (2, 60) selon les revendications 1 à 7, **caractérisé en ce qu'**il est prévu dans le châssis roulant (1, 75) au moins un moyen d'entraînement électrique (64) qui entraîne en rotation l'une au moins des poulies (7 ; 68-70).

9. Coffre de rangement mobile (2, 60) selon les revendications 1 à 8, **caractérisé en ce que** le pied (3) est conçu comme un pied basculant.

10. Coffre de rangement mobile (2, 60) selon les revendications 1 à 9, **caractérisé en ce qu'**il présente sur son côté arrière un arceau de manoeuvre (24, 76) et il est apte à être soulevé et à basculer dans son ensemble au niveau de cet arceau de manoeuvre (24, 76).

11. Coffre de rangement mobile (2, 60) selon les revendications 1 à 10, **caractérisé en ce que** les batteries d'entraînement nécessaires pour l'entraînement du châssis roulant sont disposées pour un centre de gravité bas dans le châssis roulant (1, 75).

12. Coffre de rangement mobile (2, 60) selon les revendications 1 à 11, **caractérisé en ce qu'**il se compose de plusieurs coques télescopiques (25-27 ; 44, 45, 48) qui sont disposées pour pouvoir coulisser sur deux longerons (23) espacés parallèlement, et il peut être étendu de manière modulaire.

13. Coffre de rangement mobile (2, 60) selon les revendications 1 à 12, **caractérisé en ce qu'**il comporte sur son fond des points de branchement pour le chargement d'une deuxième batterie (33) d'un ordinateur portable (21), et les ordinateurs portables (21) sont reliés par l'intermédiaire de raccordements (38) à une platine de liaison (22) qui réalise une liaison électrique avec les ordinateurs portables (21) ou avec d'autres éléments fonctionnels.

14. Coffre de rangement mobile (2, 60) selon les revendications 1 à 13, **caractérisé en ce qu'**il est prévu sur l'un des côtés extérieurs dudit coffre au moins une interface de périphérique (18) pour le raccordement d'appareils périphériques.

15. Coffre de rangement mobile (2, 60) selon les revendications 1 à 14, **caractérisé en ce que** les appareils sont câblés entre eux et sont raccordés de manière fonctionnelle, et **en ce que** le coffre de rangement (2, 60) en soi est opérationnel.

16. Coffre de rangement mobile (2, 60) selon les revendications 1 à 15, **caractérisé en ce qu'**il est destiné à recevoir des ordinateurs portables (21), une imprimante (13), un scanner (14) et des projecteurs numériques en vue de leur transport mobile.
